# EUROPÄISCHE PATENTSCHRIFT

(11) **EP 4 419 432 B1**
(45) Veröffentlichungstag und Bekanntmachung des Hinweises auf die Patenterteilung: **30.09.2026**
(21) Anmeldenummer: 22808617.9
(22) Anmeldetag: 17.10.2022
(51) Int. Cl.: B65D 1/02, B08B 9/08

(54) **MEHRWEG-KUNSTSTOFFBEHÄLTER**
REUSABLE PLASTICS CONTAINER
RÉCIPIENT EN PLASTIQUE RÉUTILISABLE

(30) Priorität: 18.10.2021 CH 0704122021
(43) Veröffentlichungstag der Anmeldung: 28.08.2024
(73) Patentinhaber: Alpla-Werke Alwin Lehner GMBH & Co.KG, 6971 Hard (AT)
(72) Erfinder: GOLDENSTEIN, Daniel, 6911 Lochau (AT); THALER, Nicolas, 6850 Dornbirn (AT)
(74) Vertreter: Bohest AG Branch Ostschweiz
(86) Internationale Anmeldenummer: PCT/EP2022/078763
(87) Internationale Veröffentlichungsnummer: WO 2023/066830

(56) Entgegenhaltungen:
- FR-A1- 3 104 555
- US-A1- 2010 000 962
- US-A1- 2013 213 984
- US-A1- 2014 217 054
- US-A1- 2021 309 798

## Beschreibung

Die vorliegende Erfindung betrifft einen Mehrweg-Kunststoffbehälter gemäss dem Oberbegriff der unabhängigen Ansprüche.

Mehrweg-Behälter sind Behälter, die beispielsweise an die Verkaufsstelle zurückgegeben werden und im Anschluss wiederverwendet werden, also erneut befüllt werden.

Dieser Vorgang ist insbesondere für Glasflaschen bekannt. Diese wurden jedoch durch Kunststoffflaschen abgelöst, da die Herstellung von Kunststoffflaschen, anders wie Glasflaschen oder auch Metallflaschen, mit einer deutlich geringeren Umformungsenergie durchgeführt werden kann. Dies führt zu einer deutlich besseren CO2-Bilanz.

Die meisten Kunststoffflaschen können nahezu vollständig rezykliert werden. Die aus alten Flaschen gewonnenen Rohstoffe können wiederverwendet werden.

Um die Umwelt- und Energiebilanzen zu verbessern, wurde bereits schon vorgeschlagen, auch Kunststoffbehälter als Mehrweg-Behälter auszubilden und mehrfach zu verwenden.

Damit Kunststoffbehälter als Mehrweg-Behälter verwendet werden können, müssen diese in Bezug zu Wegwerf-Behältern andere Anforderungen erfüllen. Beispielsweise muss sichergestellt werden, dass diese weder beim Reinigen noch beim Gebrauch bleibend deformiert werden. Dies hat dazu geführt, dass diese Behälter relativ dickwandig ausgeführt werden. Dies resultiert in hohen Flaschengewichten, beispielsweise bei 500 ml-Flaschen zwischen 35 g und 65 g und bei 1000 ml-Flaschen zwischen 50 g und 90 **g.**

Damit die Kunststoffbehälter wiederverwendet werden können, müssen die eingesammelten gebrauchten Kunststoffbehälter zunächst gereinigt werden, bevor sie erneut befüllt werden können. Da viele Kunststoffbehälter, beispielsweise Behälter aus PET, bereits bei relativ tiefen Temperaturen von beispielsweise 80°C erweichen und deformieren können, scheidet eine Reinigung mit kochendem Wasser aus. Kunststoffbehälter werden daher vielfach bei tieferen Temperaturen mit Hilfe von Laugen, beispielsweise Natronlauge (NaOH) oder Kalilauge (KOH), gereinigt. Als praktikabel hat sich dabei der Einsatz von 1.2 bis 2.4%igen NaOH-Laugen erwiesen. Der Waschprozess wird dabei bei einer Temperatur von 50°C bis 70°C während einer Dauer von 60 min durchgeführt. Das Verhalten von Polyestern, insbesondere von PET und PEF, in Verbindung mit Laugen ist jedoch nicht unproblematisch. So können Spannungsrisse im Kunststoffbehälter Angriffspunkte für die Lauge bilden, an denen es mit der Zeit zu einer Degradation des Kunststoffs kommen kann. Insbesondere kann eine Reaktion zwischen Ester und Lauge zu einer Verseifung führen.

Bei der heissen Wäsche werden derartige Behälter zudem immer kleiner, die grosse Wandstärke hilft, diesen Schrumpf kleiner als 3% bei 15 Waschzyklen zu halten.

Wie bereits erläutert führt jedoch die grosse Wandstärke zu einem hohen Gewicht. Dies hat nicht nur einen negativen Einfluss auf die Ökobilanz, sondern auch auf die Herstellungskosten. Durch das hohe Gewicht muss beispielsweise auch für den Transport sowohl der leeren als auch der gefüllten Flaschen mehr Energie aufgewendet werden. Dokument FR 3104555 A1 offenbart einer Mehrwegbehälter gemäß dem Oberbegriff des Anspruchs **1.** US2013213984 offenbart ein Mehrwegbehälter mit Behälterkörper Rillen.

Es ist Aufgabe der Erfindung zumindest einen der Nachteile des Standes der Technik zu beheben. Insbesondere soll ein Mehrweg-Kunststoffbehälter geschaffen werden, der weniger Ressourcen benötigt, vorzugsweise günstiger in der Herstellung ist und insbesondere eine hohe Stabilität aufweist.

Diese Aufgabe wird durch die in den unabhängigen Patentansprüchen definierten Mehrweg-Kunststoffbehälter gelöst. Weitere Ausführungsformen ergeben sich aus den abhängigen Patentansprüchen.

Ein erfindungsgemässer Mehrweg-Kunststoffbehälter umfasst einen Behälterkörper, einen Behälterboden und eine dem Behälterkörper gegenüberliegende Behälteröffnung. Am Behälterkörper ist eine sich wiederholende Struktur aus Vertiefungen und die Vertiefungen umschliessende Rippen angeordnet. Diese Struktur ist insbesondere als eine Wabenstruktur ausgebildet. Mindestens 90 % der Oberflächen der Vertiefungen und der Rippen sind von der Behälteröffnung einsehbar.

Dies stellt sicher, dass die entsprechenden Oberflächen von der Behälteröffnung aus mit einer Waschflüssigkeit direkt beaufschlagt werden können.

Vertiefungen sind definitionsgemäss Verformungen des Behälterkörpers in Richtung des Innern des Kunststoffbehälters.

Es hat sich gezeigt, dass sich beim Waschvorgang, insbesondere beim Waschen von PET, relativ schnell laminare Grenzschichten bilden und sich dadurch Verunreinigungen schlecht ablösen. Dieser Effekt wird zusätzlich dadurch begünstigt, dass sowohl PET als auch Wasser polar sind.

Durch die Möglichkeit der direkten Beaufschlagung der Oberflächen lassen sich hohe Strömungsgeschwindigkeiten und Verwirbelungen der Waschflüssigkeit an der Oberfläche erreichen.

Mikroorganismen bilden zum Teil gallertartige und/oder schleimartige Oberflächen aus, die an der Flaschenoberfläche als Belag anhaften, der schlecht lösbar ist. Die direkte Beaufschlagung mit Waschflüssigkeit und die dadurch entstehende Turbulenz der Strömung begünstigen das Ablösen dieser Beläge.

Das Haftenbleiben oder bereits das Entstehen derartiger Beläge wird durch das Vorhandensein von Strukturen am Behälterkörper jedoch begünstigt.

Daher ist die vorliegende Struktur, also die Erhebungen und Vertiefungen, vorzugsweise derart ausgebildet, dass ein Behälter durch Überkopfstellen entleert werden kann, sodass 3 Minuten nach Beginn der Entleerung weniger als 0.5% der Füllmenge der Waschflüssigkeit an dem Behälter anhaften bleibt. Dies stellt sicher, dass Keime schnell aus dem Behälter ausgetragen werden können.

Dies wird durch die Zugänglichkeit der Oberflachen, wie weiter oben beschrieben, erreicht, bzw. begünstigt.

Vorzugsweise ist die Restmenge weniger als 0.3 %, bevorzugt weniger als 0.1 % der Füllmenge.

Die Vertiefungen und die die Vertiefungen umschliessenden Rippen ermöglichen es, dem Behälter eine höhere Steifigkeit zu verleihen. Dadurch kann der Behälter mit deutlich geringeren Wandstärken ausgeformt werden, sodass der Materialverbrauch reduziert wird. Die Ausbildung der Vertiefungen und der die Vertiefung umschliessenden Rippen, derart, dass diese von der Behälteröffnung einsehbar und entsprechend auch von der Behälteröffnung mit einem Strahl aus Waschflüssigkeit, nachfolgend auch Wasserstrahl, beaufschlagbar sind, stellt sicher, dass der Mehrweg-Kunststoffbehälter ohne zusätzlichen Aufwand genügend ausgewaschen werden kann, sodass dieser wieder in der Lebensmittelindustrie einsetzbar ist.

Vorzugsweise sind mindestens 95 % der Oberflächen der Vertiefungen und der Rippen von der Behälteröffnung einsehbar.

Dies erhöht die Oberfläche, die mit einem Wasserstrahl direkt beaufschlagt werden kann.

Besonders bevorzugt sind mindestens 98 % der Oberflächen der Vertiefungen und der Rippen von der Behälteröffnung einsehbar.

Dies erhöht weiter die Effizienz beim Waschvorgang.

In einer besonders bevorzugten Ausführungsformen sind die Oberflächen der Vertiefungen und der Rippen von der Behälteröffnung aus vollständig einsehbar.

Dadurch kann während des gesamten Waschvorgangs auf der gesamten Oberfläche des Behälterinnern eine turbulente Strömung erzeugt werden.

Die Ausführung der sich wiederholenden Struktur als eine Wabenstruktur resultiert in einer besonders hohen Steifigkeit und/oder Unempfindlichkeit gegenüber äusseren Krafteinflüssen. Eine Wabenstruktur ist eine Struktur aus mehreren in Reihe angeordneten sechseckigen Elementen.

Die Wabenstruktur ist vorzugsweise derart angeordnet, dass sich zwei gegenüberliegende Seiten des Sechsecks im Wesentlichen entlang der Längsachse des Mehrweg-Kunststoffbehälters, beziehungsweise in Richtung der Längsachse, erstrecken. Damit bilden zwei benachbarte Seiten des Sechsecks Rippen die zur Längsachse hin eine Neigung aufweisen. Dadurch wird das Ablaufen der Waschflüssigkeit begünstigt.

Die Wabenstruktur weist eine Grösse zwischen 10 mm und 35 mm auf. Diese Abmessung entspricht jeweils der längsten Ausdehnung einer Wabe, mit anderen Worten die Distanz von zwei gegenüberliegenden Ecken.

Es hat sich gezeigt, dass Waben von dieser Grösse eine hohe Steifigkeit besitzen. Die von der Wabe umschlossene Fläche ist genügend klein, um nicht zum Beulen zu tendieren, jedoch auch genügend gross, sodass nicht der Eindruck einer texturierten Fläche entsteht, bei der sämtliche Waben miteinander verformt werden können.

Die Vertiefungen der Wabenstruktur weisen vorzugsweise eine Tiefe zwischen 3 mm und 8 mm auf.

Dadurch ist gewährleistet, dass die Wabenstruktur relativ flach ausgebildet wird und die Oberflächen entsprechend gut von der Behälteröffnung aus zugänglich sind.

Vorzugsweise weisen die Übergänge von den Rippen zu den Vertiefungen Radien auf, die grösser sind als 1 mm, insbesondere grösser als 1.5 mm. Vorzugsweise übersteigen diese Radien jedoch eine Grösse von 3 mm nicht.

Dies hat zur Folge, dass die Übergänge nicht scharfkantig sind und im Bereich der Übergänge anhaftende Flüssigkeit ungehindert ablaufen kann.

Ein weiterer Aspekt der Erfindung betrifft einen Mehrweg-Kunststoffbehälter mit einem Behälterkörper, einem Behälterboden und eine dem Behälterkörper gegenüberliegende Behälteröffnung. Am Behälterkörper sind Rillen ausgebildet, die in einem Winkel zwischen 0° und 30° zur Horizontalen ausgebildet sind. Mindestens 90 % der Oberflächen der Rillen sind von der Behälteröffnung einsehbar.

Diese Ausbildung des Behälterkörpers kann zusätzlich oder alternativ zu der bereits beschrieben Ausbildung vorgesehen sein.

Diese Rillen sind ebenfalls Vertiefungen im Sinne dieser Beschreibung.

Diese tragen, entsprechend wie die bereits beschriebene sich wiederholende Struktur, zur Erhöhung der Steifigkeit des Kunststoffbehälters bei.

Da mindestens 90 % der Oberflächen der Rillen von der Behälteröffnung einsehbar sind, können die entsprechenden Oberflächen von der Behälteröffnung aus mit einer Waschflüssigkeit direkt beaufschlagt werden.

Die Effekte, die mit dieser Anordnung erzielt werden können, entsprechen jenen, die in Bezug auf die sich wiederholende Struktur bereits beschrieben worden sind. Entsprechend ist insbesondere mindestens 95 %, vorzugsweise 98% und besonders bevorzugt die vollständige Oberfläche der Rillen von der Behälteröffnung einsehbar.

Die Steifigkeit des Behälters wird erhöht und die Wandstärken können zumindest bereichsweise reduziert werden.

Die Rillen können eine Breite von 1 mm bis 9 mm aufweisen.

Dies führt zu einer gegenüber einem Behälter ohne Rille erhöhten Steifigkeit.

Die Rillen können eine Tiefe von 1 mm bis 6 mm aufweisen. Durch die maximale Tiefe ist sichergestellt, dass sich in der Rille befindliche Verunreinigungen nicht zu fest in der Rille festsetzen und die Waschflüssigkeit entsprechend einfach ablaufen kann.

Vorzugsweise weisen die Übergänge von den Rillen zum Behälterkörper Radien auf, die grösser sind als 1 mm, insbesondere grösser als 1.5 mm. Vorzugsweise übersteigen diese Radien jedoch eine Grösse von 3 mm nicht.

Dies hat zur Folge, dass die Übergänge nicht scharfkantig sind und im Bereich der Übergänge anhaftende Flüssigkeit ungehindert ablaufen kann.

Der Mehrweg-Kunststoffbehälter kann im Bereich des Behälterkörpers eine mittlere Wanddicke aufweisen, die zwischen 0.3 mm und 0.6 mm ist.

Dies entspricht einer deutlichen Reduzierung gegenüber konventionellen Behälterkörpern von Mehrweg-Kunststoffbehältern ohne versteifende Elemente, was wiederum zu einem im Verhältnis zu konventionellen Mehrweg-Kunststoffbehälter geringeren Gewicht führt.

Der Mehrweg-Kunststoffbehälter ist vorzugsweise aus Materialien aus der Liste umfassend PET, PEN, PLA, PEF, PE, PP oder Mischungen davon ausgebildet.

Die vorgenannten Materialien, insbesondere PET oder PEF, weisen eine Viskosität von 0.7 dl/g bis 1.1 dl/g, vorzugsweise bis 0.9 dl/g, auf. Die Viskosität wird hierbei nach ASTM D4603 am Eingangsgranulat, also vor der Herstellung des Preforms, gemessen.

Überraschenderweise wurde festgestellt, dass insbesondere bei PET, entgegen der herrschenden Lehre, PET mit einer hohen Viskosität zu verwenden, eine tiefere Viskosität von Vorteil ist, da hier die Oberflächen entsprechend genau abgebildet werden können, sodass die Rillen und die Rippen präzise abgebildet werden können.

Vorzugsweise sind als Materialien Copolymere aus der Liste von Copolymeren mit 0.5 % bis 3% IPA, CHDM, FDCA oder DEG ausgewählt.

Bevorzugt sind insbesondere PET-Materialien mit einem Anteil an Isophthalsäure (IPA) grösser als 1.5 Massenprozent, insbesondere mit IPA grösser als 2 Massenprozent und einem Anteil an Diethylenglycol (DEG) grösser als 0.5 Massenprozent, insbesondere grösser als 1 Massenprozent. Der kombinierte Anteil von IPA und DEG bleibt jedoch unter 5 Massenprozent, insbesondere unter 4 Massenprozent.

Der Zusatz von IPA und/oder DEG ermöglicht insbesondere vorab die Herstellung auch dickwandigerer Preforms, da diese Zusätze das Kristallisationsverhalten verlangsamen. Zusätzlich kann durch diese Zuschläge die Schmelztemperatur herabgesetzt werden.

Vorzugsweise ist der Mehrweg-Kunststoffbehälter derart ausgebildet, dass durch die Rillen oder durch die sich wiederholende Struktur der Mehrweg-Kunststoffbehälter derart versteift wird, dass eine punktuelle Kraft von 30 N/cm^2 keine bleibende plastische Verformung verursacht. Die Kraft wird dabei über einen Zeitraum von 5 Minuten auf den Kunststoffbehälter aufgebracht.

Dies stellt sicher, dass der Mehrweg-Kunststoffbehälter während des ordnungsgemässen Gebrauchs nicht verformt wird.

Vorzugsweise ist der Mehrweg-Kunststoffbehälter derart ausgebildet, dass die Anzahl der koloniebildenden Einheiten (CFU) nach dem Waschprozess kleiner als 30, insbesondere kleiner als 10 ist.

Um diese Anzahl zu bestimmen, wir eine Testmethode der International Society of Beverage Technologist (isbt) angewandt. Diese entsprechenden Testmethoden sind im Jahr 2004 unter dem Titel "Microbiology Test Methods" Second Edition, veröffentlicht worden. Zur Anwendung kommt das Procedure 10, Microbiology Testing of Packaging Containers by Membrane Filtration, gemäss dieser Veröffentlichung.

Die Einhaltung dieser Anforderungen stellt sicher, dass die jeweiligen Mehrweg-Kunststoffbehälter unbedenklich wieder befüllt werden können.

Der Mehrweg-Kunststoffbehälter kann derart ausgebildet sein, dass am Behälter sowohl abschnittsweise eine Wabenstruktur als auch zusätzliche Rillen ausgebildet sind.

Mit den Rillen können einzelne Bereiche mit Wabenstruktur und ohne Wabenstruktur voneinander getrennt werden und zusätzlich die Steifigkeit des Mehrweg-Kunststoffbehälters erhöht werden.

Der Mehrweg-Kunststoffbehälter kann ein Volumen von 200 ml bis 3000 ml aufweisen.

Vorzugsweise ist der Mehrweg-Kunststoffbehälter aus einem Preform im Streckblasverfahren hergestellt.

Der Preform weist einen im wesentlichen länglichen Preformkörper auf und ist an seinem einen Längsende geschlossen ausgebildet. Dort befindet sich üblicherweise auch ein vom Spritzgiessen herrührender Anspritzpunkt. An das andere Ende des Preformkörpers schliesst ein Halsabschnitt an, der mit einer Ausgiessöffnung versehen ist. Der Halsabschnitt weist bereits die spätere Form des Behälterhalses auf. Bei vielen der bekannten Preforms sind der Preformkörper und der Halsabschnitt durch einen sogenannten Supportring voneinander getrennt. Der Supportring ragt radial von der Halswandung ab und dient dem Transport des Preforms bzw. des daraus hergestellten Kunststoffbehälters und einer Abstützung des Preforms am Blasformwerkzeug bzw. des Kunststoffbehälters beim Verschliessen desselben mit einer Verschlusskappe.

Der Preform wird nach seiner Herstellung entformt und kann in einem einstufigen Streckblasverfahren noch heiss sofort weiterverarbeitet werden. Bei einem Zweistufen-Streckblasverfahren wird der Preform für eine räumlich und/oder zeitlich getrennte Weiterverarbeitung auf einer Streckblasvorrichtung abgekühlt und zwischengelagert. Vor der Weiterverarbeitung in der Streckblasvorrichtung wird der Preform dann bei Bedarf konditioniert, das heisst, dem Preform wird ein Temperaturprofil aufgeprägt. Danach wird er in eine Blasform einer Streckblasvorrichtung eingebracht. In der Blasform wird der Preform schliesslich durch ein mit Überdruck eingeblasenes Gas, üblicherweise Luft, gemäss der Formkavität aufgeblasen und dabei zusätzlich mit einem Reckdorn axial verstreckt.

Es ist auch bereits ein Spritzblasverfahren bekannt, bei dem der Streckblasprozess direkt anschliessend an das Spritzen des Preforms erfolgt. Der Preform verbleibt dabei auf dem Spritzkern, der zugleich eine Art Reckdorn bildet. Der Preform wird wiederum durch Überdruck gemäss der Formkavität einer Blasform, die auf den Spritzkern zugestellt wird oder umgekehrt, aufgeblasen und dabei vom Reckdorn verstreckt. Danach wird der fertige Kunststoffbehälter entformt. Streckgeblasene bzw. spritzgeblasene Kunststoffbehälter sind anhand des üblicherweise im Bereich des Behälterbodens angeordneten, vom Preform herrührenden Anspritzpunktes identifizierbar. In diesem Anspritzpunkt ist das Kunststoffmaterial nur geringfügig bis gar nicht verstreckt.

Anhand von schematischen Figuren werden nachfolgend Ausführungsformen der Erfindung näher erläutert. Es zeigen
- Figur 1:: Einen Mehrweg-Kunststoffbehälter;
- Figur 2:: eine Detailansicht der Struktur;
- Figur 3:: einen Querschnitt durch die Struktur;
- Figur 4:: eine Schnittansicht durch den Mehrweg-Kunststoffbehälter der Figur 1;
- Figur 5:: eine weitere Schnittansicht durch den Mehrweg-Kunststoffbehälter der Figur 1;
- Figur 6:: eine Schnittansicht analog der Schnittansicht der Figur 2 durch einen alternativen Mehrweg-Kunststoffbehälter.

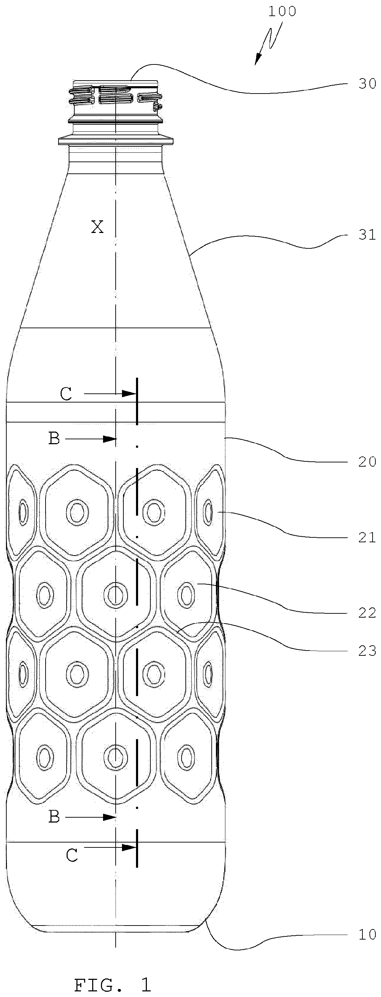

Die Figur 1 zeigt einen Mehrweg-Kunststoffbehälter 100. Der Mehrweg-Kunststoffbehälter 100 weist einen Behälterkörper 20 auf, einen Behälterboden 10 und eine Behälteröffnung 30. Die Behälteröffnung 30 ist dem Behälterboden 10 gegenüberliegend angeordnet.

Der Behälterkörper 20 ist zwischen dem Behälterboden 10 und einer konisch verlaufenden Behälterschulter 31 im Wesentlichen zylindrisch ausgebildet. In diesem Bereich ist eine Vielzahl an Elementen angeordnet, die eine sich wiederholende Struktur 21 bilden. Diese ist vorliegend als eine Wabenstruktur ausgebildet. Die sich wiederholende Struktur 21 besteht aus Vertiefungen 22 und Rippen 23, welche die Vertiefungen 22 umschliessen.

Die Waben der Wabenstruktur sind vorliegend derart angeordnet, dass sich diese mit ihrer längsten Erstreckung, also der Verbindung zweier einander gegenüberliegenden Ecken, in Richtung der Längsachse X erstrecken. Entsprechend liegen auch zwei einander gegenüberliegende Seiten der Waben in Richtung der Längsachse X.

Dies hat zur Folge, dass zwei aneinander angrenzende Seiten des Sechsecks in Richtung zur Behälteröffnung 30 hin und ebenfalls in Richtung zum Behälterboden 10 hin schräg aufeinander zulaufende Rippen bilden.

Entlang dieser Schräge kann im Behälter befindliche Flüssigkeit einfach entlanglaufen und/oder ablaufen.

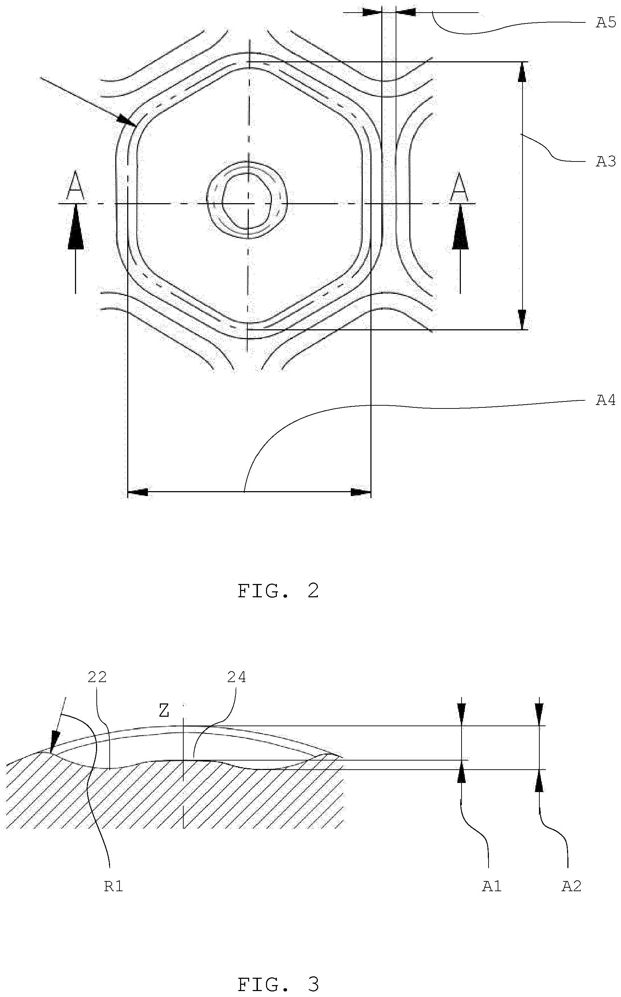

Die Figur 2 zeigt eine vergrösserte Ansicht eines Teilbereichs des Behälterkörpers 20 beziehungsweise der sich am Behälterkörper 20 befindlichen wiederholenden Struktur 21. Gezeigt ist in der Figur 2 eine einzelne Vertiefung 22 und eine um diese Vertiefung 22 umlaufende Rippe 23. Zentral in dieser Vertiefung ist eine nach aussen gerichtete Wölbung 24.

Die Vertiefung 22 ist vorliegend als eine sechseckige Wabe ausgebildet. Diese weist in ihrer grössten Länge eine Abmessung A3 von 24 mm auf. Die Breite A4 der Wabe zwischen zwei parallelen Seiten beträgt 21.7 mm.

Die Vertiefung 22 geht mit einem Radius R1 (siehe Figur 3) in eine an die Vertiefung 22 angrenzende Rippe 23 über. Zwischen dem Radius R1 eines ersten Übergangs und dem Radius R1 eines zweiten Übergangs bleibt an der Rippe 23 ein Bereich der Oberfläche des Behälterkörpers 20 bestehen, der eine Breite A5 von 1.2 mm aufweist.

Die Figur 3 zeigt Querschnitt A-A aus der Figur 2. Die Vertiefung 22 ist im Querschnitt gezeigt. Der hier gezeigte Querschnitt verläuft im Wesentlichen rotationssymmetrisch um die Achse Z herum. Die Vertiefung 22 weist eine Tiefe A2 von 3.4 mm auf. Im Bereich der Wölbung 24 beträgt die Tiefe A1 rund 2.6 mm.

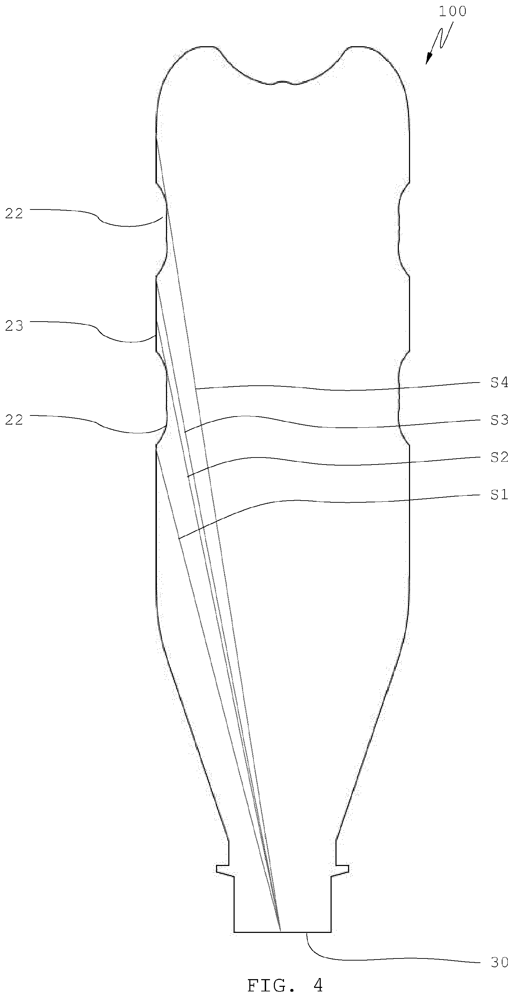

Die Figur 4 zeigt eine Schnittansicht durch den Mehrweg-Kunststoffbehälter 100 der Figur 1 während des Spülvorgangs entlang der Linie B-B aus der Figur 1.

Die Strahlen S1 bis S4 vermitteln die Einsehbarkeit der Vertiefungen 22 ausgehend von der Behälteröffnung 30. Definitionsgemäss wird als Ausgangspunkt die Mitte der Behälteröffnung 30 berücksichtigt. Es ist ersichtlich, dass die in dieser Darstellung oben liegenden Bereiche der Vertiefungen 22 ausgehend von der Eintrittsöffnung 30 nicht einsehbar sind. Die restlichen Oberflächen der Vertiefungen 22 sind jedoch von der Behälteröffnung 30 einsehbar und können von der Behälteröffnung 30 her mit einem entsprechenden Wasserstrahl beaufschlagt werden.

Mit anderen Worten ist lediglich ein geringer Bereich oberhalb von zwei Seiten des Sechsecks von der Behälteröffnung 30 her nicht zugänglich. Die restlichen vier Seiten sowie die gesamte Oberfläche des Sechsecks kann jedoch mit einem Wasserstrahl von der Behälteröffnung 30 her direkt angestrahlt werden.

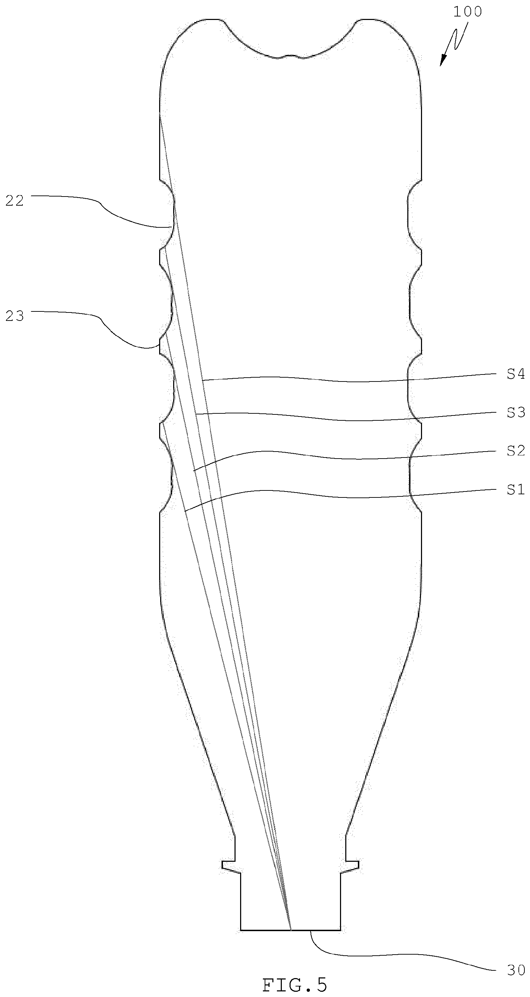

Dasselbe gilt ebenfalls für die um die Vertiefung 22 umlaufende Rippe 23 (siehe auch Figur 2). Die Beaufschlagung der Rippen 23 ist am besten ersichtlich in der Figur 5 sowie in der Figur 4. Diese werden nachfolgend im Bezug zu diesem Aspekt übergreifend beschrieben.

Die Figur 5 zeigt ebenfalls eine Schnittansicht durch den Mehrweg-Kunststoffbehälter der Figur 1, jedoch etwas verdreht gegenüber dem Querschnitt aus der Figur 4. Der Querschnitt der Figur 5 erstreckt sich durch die Linie C-C wie sie in der Figur 1 eingezeichnet ist. Der Schnitt erstreckt sich also durch die schrägen Seiten der Vertiefungen 22. Die Einsehbarkeit der Rippen 23 und Vertiefungen 22 ist analog der Figur 4 durch die Strahlen S1 bis S4 dargestellt.

Wie aus der Figur 4 ersichtlich ist, ist ein Teil der Rippen 23 vertikal ausgerichtet, erstrecken sich also in Richtung eines Wasserstrahls, der von der Behälteröffnung 30 her in den Mehrweg-Kunststoffbehälter gegeben wird. Diese werden während des Spielvorgangs entsprechend vollständig mit Wasser beaufschlagt. Die schrägen Seiten der Vertiefungen 22 liegen zwar teilweise im Schatten, gesehen von der Behälteröffnung 30, jedoch nur zu einem geringen Teil. Dieser Teil, der im Schatten liegt, wird somit während des Spielvorgangs nicht direkt mit Wasser beaufschlagt. Dieser Effekt wird jedoch durch die Schräge dieser Seiten abgemildert.

Das direkte Auftreffen des Wasserstrahls auf die zu reinigende Oberfläche führt dazu, dass hier turbulente Strömungen entstehen und sich auf der Oberfläche befindliche Beläge regelrecht abgerissen werden.

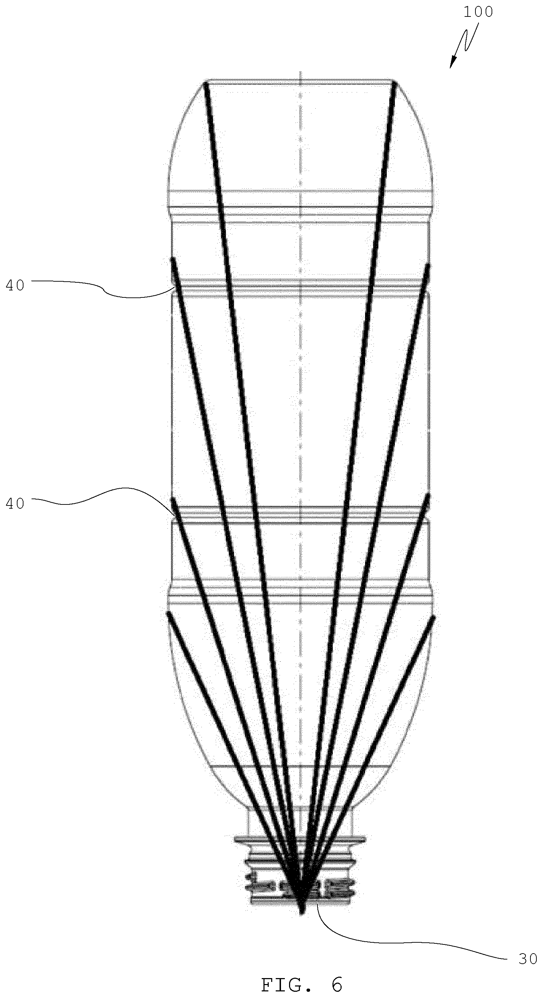

Die Figur 6 zeigt eine Schnittansicht analog der Schnittansicht der Figur 2 durch einen alternativen Mehrweg-Kunststoffbehälter 100.

Dieser Mehrweg-Kunststoffbehälter 100 weist mehrere horizontal umlaufende Rippen 40 auf, vorliegend zwei Stück. Die Einsehbarkeit von der Behälteröffnung 30 aus ist ebenfalls durch hier nicht näher bezeichnete Strahlen illustriert. Die der Behälteröffnung 30 zugewandte Seite der Rippen 40 ist von der Behälteröffnung 30 vollständig einsehbar und entsprechend während des Wasch- oder Spülvorgangs mit einem Wasserstrahl beaufschlagbar. Lediglich Teilbereiche der im Schatten der Rillen 40 liegenden Oberfläche sind nicht direkt mit Wasser beaufschlagbar. Da diese Bereiche jedoch sehr gering sind, bleibt auch in diesen Bereichen die Strömung turbulent. Entsprechend lassen sich auch Beläge, die in diesen Bereichen angeordnet sind, gut entfernen.

Die Rillen 40 gemäss der Figur 6 weisen eine Breite von 4.2 mm und eine Tiefe von 1.2 mm auf. Die Rillen gehen mit einem Radius von 1.5 mm in die Oberfläche des Behälterkörpers über.

Die Mehrweg-Kunststoffbehälter 100, die vorliegend beschrieben sind, weisen im Vergleich zum Stand der Technik ein deutlich geringeres Gewicht auf. Nichtsdestotrotz lassen Sie sich mindestens genauso gut und genauso effizient reinigen, wie die bekannten Mehrweg-Behälter. Durch die Anordnung von den Strukturen, wie vorgeschlagen, lässt sich die Steifigkeit der Flaschen erhöhen wobei diese durch ihre spezielle Ausformung nach wie vor einfach und effizient zu reinigen sind.

Selbstverständlich lassen sich die zu einzelnen Ausführungsbeispielen beschriebenen Elemente auch kombinieren.

## Patentansprüche

1. Mehrweg-Kunststoffbehälter (100), umfassend einen Behälterkörper (20), einen Behälterboden (10) und eine dem Behälterboden gegenüberliegende Behälteröffnung (30), wobei am Behälterkörper (20) eine sich wiederholende Struktur (21), insbesondere eine Wabenstruktur, aus Vertiefungen (22) und die Vertiefungen (22) umschliessende Rippen (23) angeordnet ist, **dadurch gekennzeichnet, dass** mindestens 90% der Oberflächen der Vertiefungen (22) und der Rippen (23) von der Behälteröffnung (30) einsehbar sind.

2. Mehrweg-Kunststoffbehälter (100) nach Anspruch 1, **dadurch gekennzeichnet, dass** mindestens 95% der Oberflächen der Vertiefungen (22) und der Rippen (23) von der Behälteröffnung (30) einsehbar sind.

3. Mehrweg-Kunststoffbehälter (100) nach Anspruch 1, **dadurch gekennzeichnet, dass** mindestens 98% der Oberflächen der Vertiefungen (22) und der Rippen (23) von der Behälteröffnung (30) einsehbar sind.

4. Mehrweg-Kunststoffbehälter (100) nach Anspruch 1, **dadurch gekennzeichnet, dass** die Oberflächen der Vertiefungen (22) und der Rippen (23) von der Behälteröffnung (30) vollständig einsehbar sind.

5. Mehrweg-Kunststoffbehälter (100) nach einem der Ansprüche 1 bis 4, **dadurch gekennzeichnet, dass** die Wabenstruktur (21) eine Wabengrösse zwischen 10 mm und 35 mm aufweist.

6. Mehrweg-Kunststoffbehälter (100) nach einem der Ansprüche 1 bis 5, **dadurch gekennzeichnet, dass** die Vertiefungen (22) der Wabenstruktur (21) eine Tiefe zwischen 3 mm und 8 mm aufweisen.

7. Mehrweg-Kunststoffbehälter (100) nach einem der Ansprüche 1 bis 5, **dadurch gekennzeichnet, dass** Übergänge von den Rippen (23) zu den Vertiefungen (22) Radien aufweisen, die grösser als 1 mm, insbesondere grösser als 1.5 mm sind.

8. Mehrweg-Kunststoffbehälter (100) nach einem der Ansprüche 1 bis 7, wobei am Behälterkörper (20) Rillen (40) ausgebildet sind, die in einem Winkel zwischen 0° und 30° zur Horizontalen ausgebildet sind, **dadurch gekennzeichnet, dass** mindestens 90% der Oberflächen der Rillen (40) von der Behälteröffnung (30) einsehbar sind.

9. Mehrweg-Kunststoffbehälter (100) nach Anspruch 8, **dadurch gekennzeichnet, dass** die Rillen (40) eine Breite von 1 mm bis 9 mm aufweisen.

10. Mehrweg-Kunststoffbehälter (100) nach Anspruch 8 oder 9, **dadurch gekennzeichnet, dass** die Rillen (40) eine Tiefe von 1 mm bis 6 mm aufweisen.

11. Mehrweg-Kunststoffbehälter (100) nach einem der Ansprüche 8 bis 10, **dadurch gekennzeichnet, dass** Übergänge der Rillen (40) zum Behälterkörper (20) Radien aufweisen, die grösser sind als 1 mm, insbesondere grösser als 1.5 mm.

12. Mehrweg-Kunststoffbehälter (100) nach einem der Ansprüche 1 bis 11, **dadurch gekennzeichnet, dass** der Mehrweg-Kunststoffbehälter (100) im Bereich des Behälterkörpers eine mittlere Wanddicke zwischen 0.3 mm und 0.6 mm aufweist.

13. Mehrweg-Kunststoffbehälter (100) nach einem der Ansprüche 1 bis 12, **dadurch gekennzeichnet, dass** der Mehrweg-Kunststoffbehälter (100) aus Materialien aus der Liste umfassend PET, PEN, PLA, PEF, PE, PP oder Mischungen davon ausgebildet ist.

14. Mehrweg-Kunststoffbehälter (100) nach Anspruch 13, **dadurch gekennzeichnet, dass** die Materialien eine Viskosität von 0.7 bis 1,1 dl/g, vorzugsweise bis 0.9 dl/g, gemessen nach ASTM D4603 am Eingangsgranulat, aufweisen.

15. Mehrweg-Kunststoffbehälter (100) nach Anspruch 13, **dadurch gekennzeichnet, dass** als Materialien Copolymere aus der Liste von Copolymeren mit 0.5 % bis 3% IPA, CHDM, FDCA oder DEG ausgewählt sind.

16. Mehrweg-Kunststoffbehälter (100) nach einem der Ansprüche 1 bis 15, **dadurch gekennzeichnet, dass** durch die Rillen (40) oder durch die sich wiederholende Struktur (21) der Mehrweg-Kunststoffbehälter (100) derart versteift wird, dass eine punktuelle Kraft von 30N pro cm^2 keine plastische Verformung verursacht.

17. Mehrweg-Kunststoffbehälter (100) nach Anspruch 8, **dadurch gekennzeichnet, dass** am Behälterkörper (20) abschnittsweise eine Wabenstruktur und Rillen (40) ausgebildet sind.

18. Mehrweg-Kunststoffbehälter (100) nach einem der Ansprüche 1 bis 17, **dadurch gekennzeichnet, dass** dieser ein Volumen von 200 ml bis 3000 ml aufweist.

19. Mehrweg-Kunststoffbehälter (100) nach einem der Ansprüche 1 bis 18, **dadurch gekennzeichnet, dass** dieser aus einem Preform im Steckblasverfahren hergestellt ist.

## Claims

1. A reusable plastics container (100) comprising a container body (20), a container base (10) and a container opening (30) located opposite the container base, wherein a repeating structure (21), in particular a honeycomb structure, formed by depressions (22) and ribs (23) enclosing the depressions (22) is arranged on the container body (20), **characterized in that** at least 90% of the surfaces of the depressions (22) and the ribs (23) are visible from the contain-er opening (30).

2. The reusable plastics container (100) according to claim 1, **characterized in that** at least 95% of the surfaces of the depressions (22) and the ribs (23) are visible from the container opening (30).

3. The reusable plastics container (100) according to claim 1, **characterized in that** at least 98% of the surfaces of the depressions (22) and the ribs (23) are visible from the container opening (30).

4. The reusable plastics container (100) according to claim 1, **characterized in that** the surfaces of the depressions (22) and the ribs (23) are completely visible from the container opening (30).

5. The reusable plastics container (100) according to any of claims 1 to 4, **characterized in that** the honeycomb structure (21) has a honeycomb size be-tween 10 mm and 35 mm.

6. The reusable plastics container (100) according to any of claims 1 to 5, **characterized in that** the depressions (22) of the honeycomb structure (21) have a depth between 3 mm and 8 mm.

7. The reusable plastics container (100) according to any of claims 1 to 5, **characterized in that** transitions from the ribs (23) to the depressions (22) have radii that are greater than 1 mm, in particular greater than 1.5 mm.

8. A reusable plastics container (100) according to any of claims 1 to 7, wherein grooves (40) are formed on the container body (20) which are formed at an angle between 0° and 30° to the horizontal, **characterized in that** at least 90% of the surfaces of the grooves (40) are visible from the container opening (30).

9. The reusable plastics container (100) according to claim 8, **characterized in that** the grooves (40) have a width of 1 mm to 9 mm.

10. The reusable plastics container (100) according to claim 8 or claim 9, **characterized in that** the grooves (40) have a depth of 1 mm to 6 mm.

11. The reusable plastics container (100) according to any of claims 8 to 10, **characterized in that** transitions of the grooves (40) to the container body (20) have radii that are greater than 1 mm, in particular greater than 1.5 mm.

12. The reusable plastics container (100) according to any of claims 1 to 11, **characterized in that** the reusable plastics container (100) has an average wall thickness between 0.3 mm and 0.6 mm in the region of the container body.

13. The reusable plastics container (100) according to any of claims 1 to 12, **characterized in that** the reusable plastics container (100) is formed from materials from the list comprising PET, PEN, PLA, PEF, PE, PP, or mixtures thereof.

14. The reusable plastics container (100) according to claim 13, **characterized in that** the materials have a viscosity of 0.7 to 1.1 dl/g, preferably up to 0.9 dl/g, measured according to ASTM D4603 on the input pellets.

15. The reusable plastics container (100) according to claim 13, **characterized in that** copolymers from the list of copolymers having 0.5% to 3% IPA, CHDM, FDCA or DEG are selected as the materials.

16. The reusable plastics container (100) according to any of claims 1 to 15, **characterized in that** the reusable plastics container (100) is stiffened by the grooves (40) or by the repeating structure (21) in such a way that a punctual force of 30N per cm2 does not cause plastic deformation.

17. The reusable plastics container (100) according to claim 8, **characterized in that** a honeycomb structure and grooves (40) are formed in portions on the container body (20).

18. The reusable plastics container (100) according to any of claims 1 to 17, **characterized in that** it has a volume of 200 ml to 3000 ml.

19. The reusable plastics container (100) according to any of claims 1 to 18, **characterized in that** it is produced from a preform by the plug-in blow molding method.

## Revendications

1. Récipient en plastique réutilisable (100), comprenant un corps de récipient (20), un fond de récipient (10) et un orifice de récipient (30) situé en vis-à-vis du fond de récipient, sachant qu'une structure répétitive (21), en particulier une structure alvéolaire, constituée de creux (22) et de nervures (23) entourant les creux (22), est disposée sur le corps de récipient (20), **caractérisé en ce qu'**au moins 90 % des surfaces des creux (22) et des nervures (23) sont visibles depuis l'orifice de récipient (30).

2. Récipient en plastique réutilisable (100) selon la revendication 1, **caractérisé en ce qu'**au moins 95 % des surfaces des creux (22) et des nervures (23) sont visibles depuis l'orifice de récipient (30).

3. Récipient en plastique réutilisable (100) selon la revendication 1, **caractérisé en ce qu'**au moins 98 % des surfaces des creux (22) et des nervures (23) sont visibles depuis l'orifice de récipient (30).

4. Récipient en plastique réutilisable (100) selon la revendication 1, **caractérisé en ce que** les surfaces des creux (22) et des nervures (23) sont visibles dans leur totalité depuis l'orifice de récipient (30).

5. Récipient en plastique réutilisable (100) selon une des revendications 1 à 4, **caractérisé en ce que** la structure alvéolaire (21) présente une taille des alvéoles qui est comprise entre 10 mm et 35 mm.

6. Récipient en plastique réutilisable (100) selon une des revendications 1 à 5, **caractérisé en ce que** les creux (22) de la structure alvéolaire (21) présentent une profondeur qui est comprise entre 3 mm et 8 mm.

7. Récipient en plastique réutilisable (100) selon une des revendications 1 à 5, **caractérisé en ce que** des transitions depuis les nervures (23) vers les creux (22) présentent des rayons qui sont supérieurs à 1 mm, en particulier supérieurs à 1,5 mm.

8. Récipient en plastique réutilisable (100) selon une des revendications 1 à 7, dans lequel il est prévu sur le corps de récipient (20), des rainures (40) qui sont réalisées sous un angle compris entre 0° et 30° par rapport à l'horizontale, **caractérisé en ce qu'**au moins 90 % des surfaces des rainures (40) sont visibles depuis l'orifice de récipient (30).

9. Récipient en plastique réutilisable (100) selon la revendication 8, **caractérisé en ce que** les rainures (40) présentent une largeur allant de 1 mm à 9 mm.

10. Récipient en plastique réutilisable (100) selon la revendication 8 ou 9, **caractérisé en ce que** les rainures (40) présentent une profondeur allant de 1 mm à 6 mm.

11. Récipient en plastique réutilisable (100) selon une des revendications 8 à 10, **caractérisé en ce que** des transitions depuis les rainures (40) vers le corps de récipient (20) présentent des rayons qui sont supérieurs à 1 mm, en particulier supérieurs à 1,5 mm.

12. Récipient en plastique réutilisable (100) selon une des revendications 1 à 11, **caractérisé en ce que**, dans la région du corps de récipient, le récipient en plastique réutilisable (100) présente une épaisseur de paroi moyenne qui est comprise entre 0,3 mm et 0,6 mm.

13. Récipient en plastique réutilisable (100) selon une des revendications 1 à 12, **caractérisé en ce que** le récipient en plastique réutilisable (100) est réalisé à partir de matériaux issus de la liste comportant PET, PEN, PLA, PEF, PE, PP ou de mélanges de ceux-ci.

14. Récipient en plastique réutilisable (100) selon la revendication 13, **caractérisé en ce que** les matériaux présentent une viscosité allant de 0,7 à 1,1 dl/g, de préférence jusqu'à 0,9 dl/g, mesurée selon ASTM D4603 sur le granulat d'entrée.

15. Récipient en plastique réutilisable (100) selon la revendication 13, **caractérisé en ce que** sont sélectionnés en tant que matériaux, des copolymères issus de la liste de copolymères avec 0,5 % à 3 % d'IPA, CHDM, FDCA ou DEG.

16. Récipient en plastique réutilisable (100) selon une des revendications 1 à 15, **caractérisé en ce que** les rainures (40) ou la structure répétitive (21) ont pour effet de rigidifier le récipient en plastique réutilisable (100) de manière à ce qu'une force ponctuelle de 30 N par cm^2 ne provoque pas de déformation plastique.

17. Récipient en plastique réutilisable (100) selon la revendication 8, **caractérisé en ce qu'**une structure alvéolaire et des rainures (40) sont réalisées dans certaines portions sur le corps de récipient (20).

18. Récipient en plastique réutilisable (100) selon une des revendications 1 à 17, **caractérisé en ce que** celui-ci présente un volume allant de 200 ml à 3 000 ml.

19. Récipient en plastique réutilisable (100) selon une des revendications 1 à 18, **caractérisé en ce que** celui-ci est réalisé à partir d'une préforme selon un procédé d'étirage-soufflage.
